Europäisches Patentamt

(19) European Patent Office   (11) Publication number: **0 226 373**
**B1**

Office européen des brevets

(12) **EUROPEAN PATENT SPECIFICATION**

(45) Date of publication of the patent specification:
28.02.90

(21) Application number: **86309338.1**

(22) Date of filing: **01.12.86**

(51) Int. Cl.⁴: **C02F 3/20**

(54) **A diffuser device.**

(30) Priority: **10.12.85  GB 8530410**

(43) Date of publication of application:
**24.06.87 Bulletin 87/26**

(45) Publication of the grant of the patent:
**28.02.90 Bulletin 90/9**

(84) Designated Contracting States:
**AT BE CH DE ES FR GR IT LI LU NL SE**

(56) References cited:
**CH-A- 506 445**
**DE-A- 3 227 671**
**FR-A- 2 306 001**
**GB-A- 638 185**

(73) Proprietor: **W.L. GORE & ASSOCIATES, INC., 555 Paper Mill Road P.O. Box 9329, Newark Delaware 19711(US)**

(72) Inventor: **Norman, Edward George, "Forthview" Hawk Hill Point, Aberdour Fife KY3 0TZ Scotland(GB)**

(74) Representative: **Taylor, Derek George et al, MATHISEN, MACARA & CO. The Coach House 6-8 Swakeleys Road, Ickenham Uxbridge UB10 8BZ(GB)**

## Description

This invention relates to diffuser devices suitable for receiving a flow of air and diffusing the air in the form of small bubbles into a mass of liquid in contact with the device.

The applications of such a diffuser device includes aeration of aqueous media such as in aerobic water waste digestors, aerobic fermentation reactors, biomass processes, for example involving the need to support and oxygenate a stable film of enzyme-active micro-organisms, and reoxygenation of river water. Such devices can also be used as tracer pipes for locating the position of submarine pipelines or cables. For example, the diffuser device can be formed as a pipe which is laid along the side of the installation and through which air can be pumped to produce a stream of bubbles. The bubbles appearing on the surface will enable the position of the main pipeline or cable below the surface to be identified.

Such diffuser devices hitherto proposed include pipes of porous ceramic, glass or metal into which air can be pumped and which will diffuse bubbles of a controlled size. One disadvantage of such a porous tube is that it must be kept at constant positive pressure to prevent water entering the tube when not in use. Moreover, the pores of such materials are easily clogged by organic materials such as marine growth or sludge. Other known devices include rubber membranes which have been pierced by needles to produce a multiplicity of holes which will open when a predetermined pressure is applied. The holes will also close when the pressure within the tube drops, but such holes will be of varibale size depending on the positive pressure within the tube, and the size of the bubbles will accordingly vary.

According to the present invention there is provided a diffuser device suitable for receiving a flow of air and diffusing said air in the form of small bubbles into a mass of liquid in contact with the device, the device comprising a porous tube and a tubular jacket surrounding and supported by said tube, said jacket comprising a hydrophobic porous plastics material consisting essentially of porous expanded polytetrafluoroethylene (P.T.F.E.).

In a preferred embodiment of the invention, the PTFE is in the form of a tape wound helically in overlapping turns along the external surface of the porous tube. Two or more layers of the helically wound tape can be provided, such that the turns of one layer extend at a substantial angle to the turns of the next adjacent layer. In this way, the free edges of the turns of one layer are held down by the next adjacent layer above it.

A form of PTFE tape suitable for use in this connection is that disclosed in British Patent No. 1 355 373 of W.L. Gore & Associates, Inc. This PTFE tape has been stretch expanded to produce microscopic pores in the tape which allow air to diffuse therethrough but prevent the passage of liquid.

The porous support tube can be of a perforated or porous plastics material or a porous ceramic, glass or metal tube. A suitable material would be a porous plastics material as produced by the Netlon pocess in polyethylene, polypropylene or P.V.C. Alternatively the tube could be made of wire mesh.

The PTFE tape can be applied by known cable or tube winding techniques by rotating a reel of tape about the axis of the tube and at the same time moving the reel longitudinally along the tube. If two or more reels of tape are wound with each reel rotating in the opposite sense to the next adjacent reel, a multiplicity of layers of tape can be built up along the length of the tube.

If the turns in each layer of tape overlap one another, as in the preferred embodiment, the trailing edge of each winding holds down the leading edge of the preceding winding so that only the trailing edge of the tape is exposed on the outer surface of the layer. If the next layer is wound on in the opposite sense, the turns of the second layer will intersect the turns of the first layer at a substantial acute angle so that the trailing edge of the tape of the first layer will be held down by the turns of the second layer. Further layers can be built up in this way, and each layer preferably is wound in the opposite sense to the preceding layer. The tension of the tape and the application of multiple layers ensures that the seams between adjacent turns of each tape layer are watertight.

The angle of overlap and the degree of tension of the tape is controlled by suitable tension controlling mechanisms.

The selection of tape width depends on the diameter of the support tube to be covered. Tape widths between 20 mm. and 100 mm. gives satisfactory results on tube diameters of 20 mm. to 600 mm. When the required number of layers of tape have been wound on the tube, the ends of the tube are encapsulated by a suitable end caps.

To control pressure drop along a long length of such tube, a porosity gradient can be created along the length of the tube by varying the number of multiple layers at different positions along the tube or by varying the overlap of the turns of each winding.

The preferred form of tape is one which has been produced by controlled stretching from extruded or sintered PTFE resin and has a tape thickness of 0.05 mm. to 0.10 mm. A desirable tape porosity range is from 0.2 to 5.0 micrometer pore size with volume porosity from 50 to 95%.

The selection of porosity of the membrane formed by the jacket of tape surrounding the tube influences the rate of gas flow, and also the size of gas bubbles involved. In aeration processes for sewage treatment and fermentation processes, the ideal gas bubble size is between 1 mm. and 3 mm. diameter.

The invention is illustrated, by way of example, in the accompanying drawings in which:-

Figure 1 is a diagrammatic view of a tube winding operation;

Figure 2 shows a tube on which multiple layers of tape have been built up;

Figure 3 is a perspective view of a single element diffuser device;

Figure 4 is a perspective view of a twin arm or T-section device, and

Figure 5 is a plan view of a manifold.

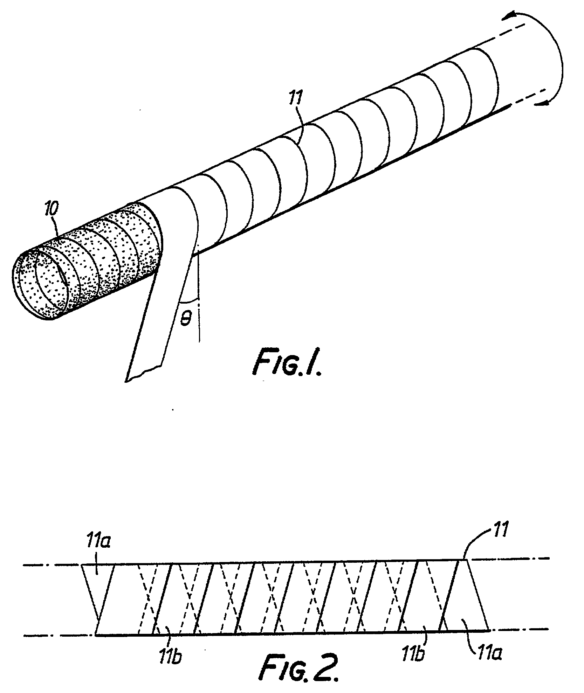

As shown in Figure 1, porous hydrophobic tape 11, such as expanded PTFE, is wound helically on a porous support tube 10 from a supply reel, for example by rotating the tube, to build up a jacket 12. The reel of tape is caused to move longitudinally along the tube to provide a wrapping angle which is dependent on the width of the tape and the desired amount of overlap between adjacent turns. Preferably the minimum overlap is one quarter of the tape width and the tension maintained in the tape is a minimum of 1 Kg. per inch width (0.4 Kg per cm. width) of tape.

Figure 2 shows the effect of building up multiple layers of tape with the turns 11a in one layer extending at a substantial angle to the turns 11b in the next adjacent layer. This can be achieved by winding the first layer from a first end to a second end of the tube, and then by winding a second layer from the second end back to the first end of the tube, the tube rotating in the same direction in each case. Alternatively the tube could be held stationary and the tape wound in opposite directions about the tube simultaneously but at staggered positions along the tube.

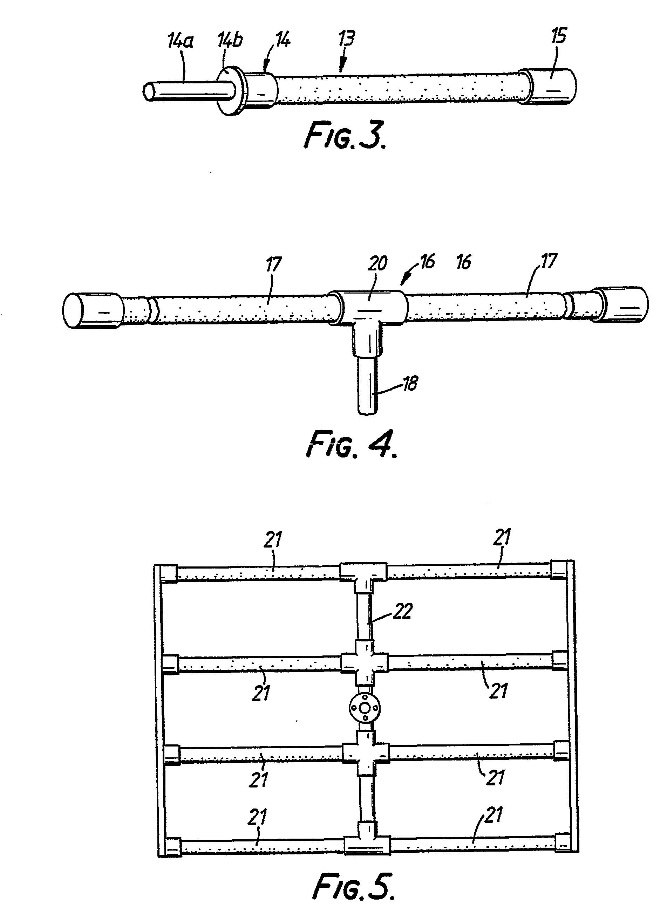

Figure 3 illustrates a finished embodiment of the device 13 in which end caps 14,15 have been fitted to opposite ends of the tube, the end cap 14 at the supply end of the tube including an air entry pipe 14a connected to an end flange 14b of the cap.

Figure 4 shows a T-section diffuser 16 formed with two arms 17 each comprising a separate diffuser device coupled to an air or other gas inlet pipe 18 through a tubular T-junction 20.

Figure 5 shows a manifold of four pairs of diffuser devices 21 extending in opposite directions from a central air inlet tube 22.

## Claims

1. A diffuser device suitable for receiving a flow of air and diffusing said air in the form of small bubbles into a mass of liquid in contact with the device, the device comprising a porous tube (10) and a tubular jacket (12) surrounding and supported by said tube, said jacket comprising a hydrophobic porous plastics material consisting essentially of porous expanded polytetrafluoroethylene (P.T.F.E.).

2. A device according to claim 1 wherein said PTFE is in the form of a tape (11) wound helically in overlapping turns along the external surface of the porous tube (10).

3, A device acording to claim 2 having two or more layers of said helically wound tape, the turns of each layer extending at a substantial angle to the turns of the next adjacent layer.

4. A device according to claim 2 wherein a first helical winding (11a) of tape is covered by a second helical winding (11b) of tape which has been wound in the same direction as but in the opposite sense to the first winding.

5. A device according to claim 1 wherein the PTFE is in the form of a tape (11) wound helically in a plurality of layers along the exterior surface of the porous tube such that substantially the whole of the exterior of the tube is covered by PTFE and the

turns (11b) of one layer intersect the turns (11a) of the layer next adjacent beneath it.

## Patentansprüche

1. Diffusoreinrichtung, welche zur Aufnahme eines Luftstromes und zur Verteilung dieser Luft in Form kleiner Bläschen in eine Masse einer Flüssigkeit geeignet ist, welche mit der Einrichtung in Berührung steht, welche Einrichtung ein poröses Rohr (10) und einen rohrförmigen Mantel (12) aufweist, der das Rohr umgibt und von diesem getragen wird, welcher Mantel ein hydrophobes poröses Kunststoffmaterial enthält, welches im wesentlichen aus porösem expandierten Polytetrafluoräthylen (P.T.F.E.) besteht.

2. Einrichtung nach Anspruch 1, dadurch gekennzeichnet, daß das PTFE die Form eines Bandes (11) hat, welches schraubenlinienförmig in überlappenden Windungen die Außenfläche des porösen Rohres (10) entlang gewickelt ist.

3. Einrichtung nach Anspruch 2, welche zwei oder mehr Lagen des schraubenlinienförmig gewundenen Bandes aufweist, wobei die Windungen jeder Lage in einem beträchtlichen Winkel zu den Windungen der nächsten anliegenden Lage verlaufen.

4. Einrichtung nach Anspruch 2, dadurch gekennzeichnet, daß eine erste schraubenlinienförmige Wicklung (11a) des Bandes von einer zweiten schraubenlinienförmigen Wicklung (11b) des Bandes überdeckt ist, welche in der gleichen Richtung aber in entgegengesetztem Sinn zur ersten Wicklung gewickelt worden ist.

5. Einrichtung nach Anspruch 1, dadurch gekennzeichnet, daß das PTFE die Form eines Bandes (11) hat, welches schraubenlinienförmig in einer Mehrzahl von Lagen längs der Außenfläche des porösen Rohres gewickelt ist, in der Weise, daß im wesentlichen das gesamte Äußere des Rohres mit PTFE bedeckt ist und die Windungen (11b) einer Lage die Windungen (11a) der nächsten angrenzenden, darunterliegenden Lage kreuzen.

## Revendications

1. Dispositif diffuseur convenant pour recevoir une circulation d'air et diffuser cet air sous la forme de petites bulles dans une masse de liquide en contact avec le dispositif, ce dispositif comprenant un tube poreux (10) et une enveloppe tubulaire (12) entourant et supportée par le tube précité, cette enveloppe comprenant une matière plastique poreuse, hydrophobe se composant essentiellement de polytétrafluoréthylène expansé, poreux (P.T.F.E.).

2. Dispositif suivant la revendication 1, caractérisé en ce que le PTFE a l'allure d'un ruban (11) enroulé hélicoïdalement sous la forme d'enroulements se superposant le long de la surface extérieure du tube poreux (10).

3. Dispositif suivant la revendication 2, comportant deux ou plusieurs couches du ruban enroulé hélicoïdalement précité, les enroulements de chaque couche s'étendant suivant un angle important par rapport aux enroulements de la couche adjacente suivante.

4. Dispositif suivant la revendication 2, caractérisé en ce qu'un premier enroulement hélicoïdal (11a) de ruban est recouvert d'un second enroulement hélicoïdal (11b) de ruban, qui a été enroulé dans la même direction que le premier enroulement mais dans le sens opposé à celui-ci.

5. Dispositif suivant la revendication 1, caractérisé en ce que le PTFE est sous la forme d'un ruban (11) enroulé hélicoïdalement en une série de couches le long de la surface extérieure du tube poreux de manière à ce que pratiquement la totalité de l'extérieur du tube soit recouverte par du PTFE et en ce que les enroulements (11b) d'une couche coupent les enroulements (11a) de la couche suivante adjacente en dessous de la couche précitée.

*Fig.I.*

*Fig.2.*

14a  14b  14  13                    15

FIG. 3.

17        20  16  16        17

18

FIG. 4.

21                    21

22

21        21

21        21

21        21

FIG. 5.